# EUROPEAN PATENT SPECIFICATION

(11) **EP 1 614 907 B1**
(45) Date of publication and mention of the grant of the patent: **07.11.2007**
(21) Application number: 05250021.2
(22) Date of filing: 06.01.2005
(51) Int. Cl.: F15B 15/20, B23B 31/30, F15B 20/00

(54) **Hydraulic cylinder**
Hydraulischer Zylinder
Vérin hydraulique

(30) Priority: 06.07.2004 KR 2004052255
(43) Date of publication of application: 11.01.2006
(73) Proprietor: Samchully Machinery Co., Ltd., Bucheon-si, Kyunggi-do 420-807 (KR)
(72) Inventor: Seo, Hong Suk, Kangseo-gu Seoul 157-010 (KR)
(74) Representative: Hale, Peter

(56) References cited:
- US-A- 3 748 968
- US-A- 4 747 337
- PATENT ABSTRACTS OF JAPAN vol. 010, no. 070 (M-462), 19 March 1986 (1986-03-19) -& JP 60 215109 A (KITAGAWA TEKKOSHO:KK), 28 October 1985 (1985-10-28)

## Description

The present invention relates to a hydraulic cylinder, and more particularly to a hydraulic cylinder having check valves with simple structure and compact design, thus contributing to the economy of manufacturing process and cost.

A hydraulic cylinder is a cylinder designed to convert fluid energy of liquid to mechanical energy for movement. Generally, the hydraulic cylinder is driven by the pressure of fluid provided into a cylinder chamber thereof, so that it can grip or release a chuck provided on a main axis of a machine tool such as lathe.

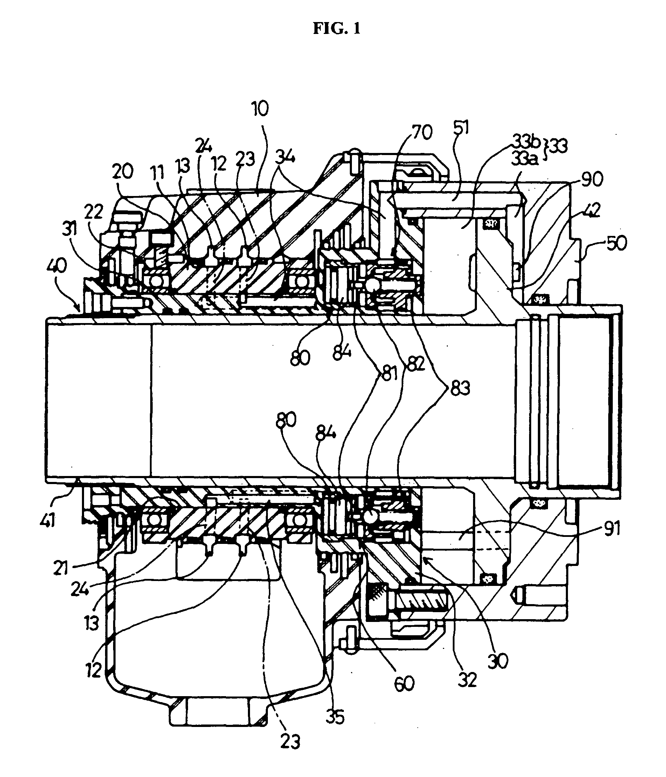

A conventional hydraulic cylinder as shown in Fig. 1 comprises:
a cylinder housing (10) having a through path (11) formed from one end to the other end and including first and second fluid paths (12 and 13) provided from an outer surface of the housing (10) to an inner surface of the through path (11);
a sleeve member (20) having a connection part (21) formed from one end to the other end and including bearings (22) in the connection part (21) and third and fourth fluid paths (23 and 24) in communication with the first and second fluid paths (12 and 13);
a rotational valve member (30) having a valve rod (31) coupled with the connection part (21) at one end and a valve plate (32) provided in front of the cylinder housing (10), with one side end of the valve plate (32) being provided with a cylinder chamber (33), and including fifth and sixth fluid paths (34 and 35) formed to connect the third and fourth fluid paths (23 and 24) to the cylinder chamber (33);
a piston member (40) including a piston rod (41) fitted to the valve rod (31) to slidably move back and forth and a piston plate (42) protruded from the piston rod (41) to divide the cylinder chamber (33) into front and rear cylinder chambers (33a and 33b) and to seal the front and the rear cylinder chambers (33a and 33b) to a periphery of the piston rod (41);
a body member (50) provided in front of the valve plate (32) to include the cylinder chamber (33) therein and having a seventh fluid path (51) provided on one side thereof to connect the fifth fluid path (34) to the front cylinder chamber (33a);
a check valve for the front cylinder chamber (70) provided on the sixth fluid path (35) in the rotational valve member (30) to control fluid flowing through the sixth fluid path (35) and the seventh fluid path (51) to the front cylinder chamber (33a) in a constant direction; and
a check valve for the rear cylinder chamber (60) provided on the fifth fluid path (34) in the rotational valve member (30) to control fluid flowing through the fifth fluid path (34) to the rear cylinder chamber (33b) in a constant direction.

The piston member (40) moves back and forth by simultaneously supplying fluid to one of the front and the rear cylinder chambers (33a and 33b) and discharging fluid from the other one of the front and the rear cylinder chambers (33a and 33b). By this reciprocating motion of the piston member (40), a jaw of a chuck connected to the piston rod (41) can be gripped or released.

Either of the check valves for the front and the rear cylinder chambers (60 and 70) comprises:
a valve housing (80) having a fluid passage (81) therein;
a steel ball (82) elastically supported by a spring member (83) to block the fluid passage (81) and to open the fluid passage (81) when fluid of a certain pressure or higher is supplied; and
a pilot spool (84) provided on one side of the valve housing (80) to move by the pressure of fluid supplied to either of the check valves (60 and 70) and to push the steel ball (82), thus opening the fluid passage (81).

Therefore, if the fluid at a certain pressure or higher is supplied to the check valve for the front or rear cylinder valve (60 or 70), the fluid passage (81) is opened to supply the fluid to or to discharge it from the cylinder chamber (33).

If the supply of fluid pressure is interrupted by shut-off of the power supply of a machine tool, e.g., by a suspension of electric power, the steel ball (82) returns to its original position by the restoring force of the spring member (83) and blocks the fluid passage (81), so that the fluid filled in the cylinder chamber (33) is prevented from being discharged and the chuck is prevented from being released from the machine tool.

Further, the piston plate (42) of the piston member (40) is provided with a relief valve (90) to reduce pressure in the cylinder chamber (33) by communicating the front cylinder chamber (33a) with the rear cylinder chamber (33b) when overpressure is generated in the front or the rear cylinder chamber (33a or 33b).

Furthermore, a guide pin (91) having both ends fixed on the body member (50) and the rotational valve member (30) respectively is provided through the piston plate (42) of the piston member (40), so that the piston member (40) is guided in its reciprocating motion to move smoothly with the front and the rear cylinder chambers (33a and 33b) sealed.

However, in the above conventional hydraulic cylinder, the check valves for the front and the rear cylinder chambers (60 and 70) and the relief valve (90) had to be manufactured separately. Thus, the overall length of the hydraulic cylinder needed to be long to include the check valves (60 and 70) and the relief valve (90) therein.

Further, the guide pin (91) had to be provided in the conventional hydraulic cylinder to guide the reciprocating motion of the piston member (40), and it increased manufacturing costs and rendered manufacturing efficiency deteriorated.

Therefore, the hydraulic cylinder was so complicated in its structure and so large that there was a limitation in compacting its structure and size for use in any kind of machine tools.

In addition, since the body member (50) was provided with the seventh fluid path (51) on one side thereof to supply fluid to or discharge from the front cylinder chamber (33a), it was likely that the strength of the side of the body member (50) became weaker than the other side of it.

Patent abstract of Japan Vol. 010, no. 070 and JP 60215109A relate to a rotary fluid pressure cylinder with safety mechanism. US-A-4747337 refers to a rotary fluid cylinder for operating chucks.

Therefore, the object of the present invention is to provide a hydraulic cylinder with a compact and simple structure, contributing to the economy of manufacturing process and cost.

Another object of the present invention is to provide a hydraulic cylinder having check valves to control the flow of fluid supplied to front and rear cylinder chambers of the hydraulic cylinder and having guide protrusions in valve housings of the check valves to guide a reciprocating motion of a piston member, thus not including a separate guide pin.

A further object of the present invention is to provide a hydraulic cylinder including a decompressing means integrally provided in the valve housings of the check valves to reduce overpressure generated in the front and the rear cylinder chambers during the operation of the hydraulic cylinder, thus not including a separate decompressing valve, i.e., a relief valve.

A hydraulic cylinder according to the invention is recited in the accompanying claims. Preferred features are recited in the dependent claims.

In one embodiment an actuator according to the present invention comprises:
a cylinder housing (10) having a through path (11) formed from one end to the other end and including first and second fluid paths (12 and 13) provided from an outer surface of the housing (10) to an inner surface of the through path (11);
a sleeve member (20) fixed in contact with the through path (11) of the cylinder housing (10), having a connection part (21) formed from one end to the other end, and including bearings (22) in the connection part (21) and third and fourth fluid paths (23 and 24) in communication with the first and second fluid paths (12 and 13);
a rotational valve member (30) having a valve rod (31) coupled with the connection part (21) at one end and a valve plate (32) provided in front of the cylinder housing (10), with one side end of the valve plate (32) being provided with a cylinder chamber (33), and including fifth and sixth fluid paths (34 and 35) formed to connect the third and fourth fluid paths (23 and 24) to the cylinder chamber (33);
a piston member (40) including a piston rod (41) fitted to the valve rod (31) to slidably move back and forth and a piston plate (42) protruded from the piston rod (41) to divide the cylinder chamber (33) into front and rear cylinder chambers (33a and 33b) and to seal the front and the rear cylinder chambers (33a and 33b) to a periphery of the piston rod (41);
a body member (50) provided in front of the valve plate (32) and including the cylinder chamber (33) supplied with fluid therein to seal up the cylinder chamber (33);
a check valve for the front cylinder chamber (60) provided on the fifth fluid path (34) in the rotational valve member (30) and including a first cutoff means (62) to open a first fluid passage (61a) only when fluid at a predetermined pressure or higher is supplied into a first valve housing (61), which includes the first fluid passage (61a) formed in communication with the fifth fluid path (34); and
a check valve for the rear cylinder chamber (70) provided on the sixth fluid path (35) in the rotational valve member (30) and including a second cutoff means (72) to open a second fluid passage (71a) only when fluid at a predetermined pressure or higher is supplied into a second valve housing (71), which includes the second fluid passage (71a) formed in communication with the sixth fluid path (35),
wherein the first valve housing (61) is provided with the first fluid passage (61a) to connect the fifth fluid path (34) to the front cylinder chamber (33a), and includes a first guide protrusion (63) at one end thereof formed to be coupled with an inner side surface of the body member (50) through the piston plate (42),
wherein the second valve housing (71) is provided with the second fluid passage (71 a) to connect the sixth fluid path (35) to the rear cylinder chamber (33b), and includes a second guide protrusion (73) at one end thereof formed to be coupled with the inner side surface of the body member (50) through the piston plate (42), and
wherein the second guide protrusion (73) is provided with a decompression means (100) to reduce pressure at the cylinder chamber (33) by communicating the front and the rear cylinder chambers (33a and 33b) when overpressure is generated in the front or the rear cylinder chamber (33a and 33b).

The first and the second valve housings (61 and 71) of the check valves (60 and 70), which are coupled with the inner side surface of the body member (50) through the piston plate (42), serve to guide the reciprocating motion of the piston member (40).

Further, since the decompression means (100) to reduce the overpressure generated in the cylinder chamber (33) during the operation of a machine tool is provided in the second valve housing (71), a separate relief valve (90 in Fig. 1) is not necessary to be provided in the cylinder chamber (33).

The accompanying drawings, which are included to provide a further understanding of the invention and are incorporated in and constitute a part of this specification, illustrate embodiments of the invention and together with the description serve to explain the principles of the invention, wherein:
Fig. 1 is a cross sectional view of a conventional hydraulic cylinder;
Fig. 2 is a perspective view of a hydraulic cylinder according to the present invention;
Fig. 3 is a cross sectional view of the hydraulic cylinder according to the present invention, wherein a piston member (40) is withdrawn;
Fig. 4 is a cross sectional view showing a check valve (60) for a front cylinder chamber of the hydraulic cylinder according to the present invention, wherein a first fluid path (61a) is formed in a first valve housing (61), extending to an end of the first valve housing (61);
Fig. 5 is a cross sectional view showing a check valve (70) for a rear cylinder chamber of the hydraulic cylinder according to the present invention, wherein a decompression means (100) is provided in a second valve housing (71) to be opened when overpressure is generated in front and rear cylinder chambers; and

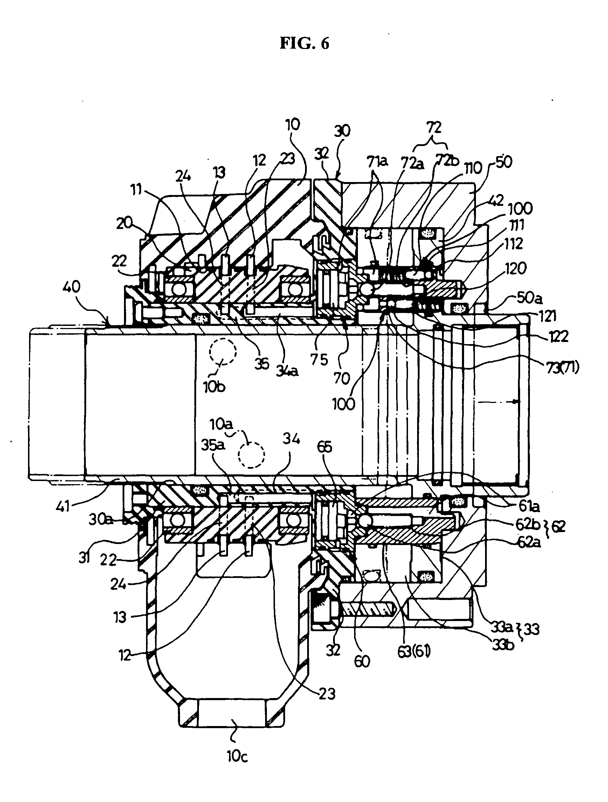

Fig. 6 is a cross sectional view showing a state of use of the hydraulic cylinder according to the present invention, wherein the piston member (40) operates to move back and forth.

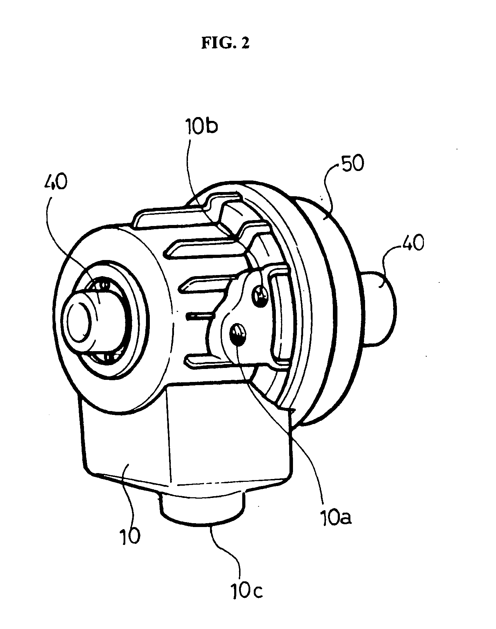

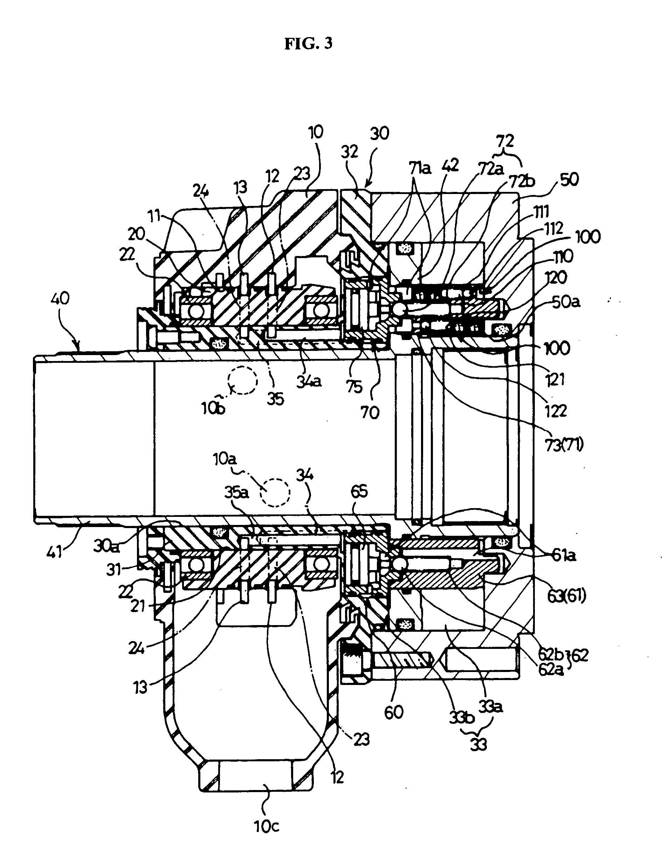

As shown in Figs. 2 and 3, a cylinder housing (10) of the hydraulic cylinder according to the present invention is provided with a through path (11) formed from one end to the other end thereof and includes first and second hydraulic ports (10a and 10b), through which fluid flows in and out, and a drain port (10c) to discharge the incoming fluid.

The hydraulic cylinder is provided with first and second fluid paths (12 and 13) formed from an outer surface of the housing (10) to an inner surface of the through path (11). The first fluid path (12) is in communication with the first hydraulic port (10a) and the second fluid path (13) is in communication with the second hydraulic port (10b).

A sleeve member (20) is fixed in contact with the through path (11) of the cylinder housing (10), and includes a connection part (21) formed from one end to the other end.

The sleeve member (20) includes bearings (22) at both ends in the connection part (21) as in Fig. 3, and third and fourth fluid paths (23 and 24) are formed between the bearings (22) in the connection part (21) to be in communication with the first and second fluid paths (12 and 13).

Further, a rotational valve member (30) is connected to the connection part (21) of the sleeve member (20), so that the rotational valve member (30) can be rotated smoothly by the bearings (22) when an object gripped by a chuck of the machine tool is rotated.

The rotational valve member (30) comprises a valve rod (31) provided with an insertion part (30a), to which the piston member (40) is slidably connected, and coupled with the connection part (21) of the sleeve member (20); and a valve plate (32) protruded at one end of the valve rod (31) to have a predetermined thickness and provided in front of the cylinder housing (10).

The valve plate (32) is connected to the cylinder housing (10) by a Labyranth sealing structure. A cylinder chamber (33) is provided in front of the valve plate (32).

In the rotational valve member (30), fifth and sixth fluid paths (34 and 35) are formed to connect the third and fourth fluid paths (23 and 24) to the cylinder chamber (33).

Further, in the rotational valve member (30), a first fluid compression passage (34a) is provided to be connected to the third fluid path (23), and it guides fluid to compress a second pilot spool (75) of a check valve for a rear cylinder chamber (70) provided on the sixth fluid path (35). A second fluid compression passage (35a) is also provided in the rotational valve member (30) to be connected to the fourth fluid path (24), and it guides fluid to compress a first pilot spool (65) of a check valve for a front cylinder chamber (60) provided on the fifth fluid path (34).

Since the rotational valve member (30) rotates with the object gripped by a jaw of the chuck as the piston member (40) moves back and forth, the valve plate (32) of the rotational valve member (30) is sealed with the cylinder housing (10) by the Labyranth sealing structure, in which a plurality of protrusions formed to make a room between the valve plate (32) and the cylinder housing (10) are engaged with a plurality of grooves, not to be in contact with each other.

Meanwhile, the piston member (40) is coupled with the insertion part (30a) of the rotational valve member (30) and includes a piston rod (41) fitted to the valve rod (31) to slidably move back and forth. A piston plate (42) is protruded along a periphery of the piston rod (41) to divide the cylinder chamber (33) into front and rear cylinder chambers (33a and 33b) and to seal the front and the rear cylinder chambers (33a and 33b).

Further, a body member (50) is provided in front of the rotational valve member (30) to seal up the cylinder chamber (33) therein.

The body member (50) is provided with a coupling aperture (50a), to which the piston rod (41) is connected with sealing. Thus, when the piston member (40) moves forward by the pressure of the fluid supplied into the cylinder chamber (33), the piston rod (41) protrudes to a front surface of the body member (50), whereby the jaw of the chuck of the machine tool which has been connected to the piston rod (41) is gripped or released.

The check valves for the front and the rear cylinder chambers (60 and 70) are provided in the rotational valve member (30), so that the fluid which has been supplied to the front and the rear cylinder chambers (33a and 33b) through the fifth and sixth fluid paths (34 and 35) of the rotational valve member (30) is controlled to flow in one direction.

The check valve for the front cylinder chamber (60) is provided on the fifth fluid path (34) in the rotational valve member (30) and is provided with a first cutoff means (62) to open a first fluid passage (61a) only when fluid is supplied at a predetermined pressure or higher into the first valve housing (61), which includes the first fluid passage (61a) formed in communication with the fifth fluid path (34).

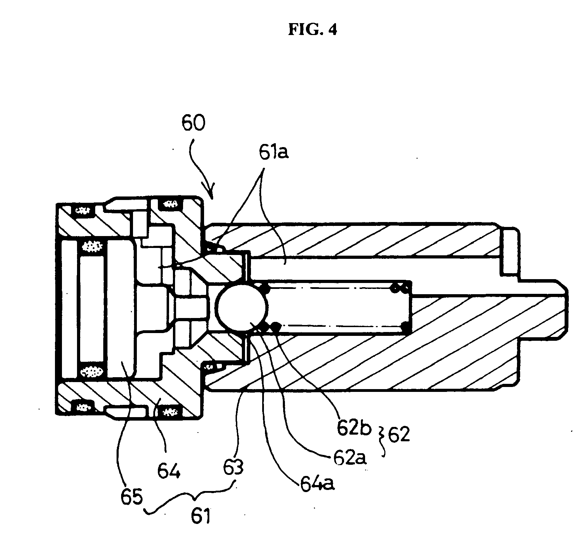

Referring to Figs. 3 and 4, the first valve housing (61) is provided on the fifth fluid path (34) of the rotational valve member (30), and comprises:
a first base body part (64) provided with the first fluid passage (61a) formed in communication with the fifth fluid path (34) and having a first ball-seating groove (64a) in its front surface;
a first guide protrusion (63) connected to the first base body part (64), with an end of the first guide protrusion (63) coupled with an inner side surface of the body member (50) through the piston plate (42), and having the first fluid passage (61a) therein to communicate the fifth fluid path (34) to the front cylinder chamber (33a); and
the first pilot spool (65) provided in a rear part of the first base body part (64) to move by the pressure of fluid supply.

Further, the first cutoff means (62) to isolate the first fluid passage (61a) comprises a first ball member (62a) secured on the first ball-seating groove (64a) of the first base body part (64); and a first coil spring (62b) to elastically support the first ball member (62a) in the first fluid passage (61 a).

Therefore, the first ball member (62a) is elastically supported by the first coil spring (62b) to block the first fluid passage (61a), with securing on the first ball-seating groove (64a).

At this state, only when fluid is supplied to the first fluid passage (61a) through the fifth fluid path (34) with a pressure high enough to push the first ball member (62a), the first fluid passage (61a) is opened to provide the fluid to the front cylinder chamber (33a).

When the fluid is supplied to the front cylinder chamber (33a), since fluid is simultaneously supplied through the first fluid compression passage (34a), the fluid pressure pushes the second pilot spool (75) to move.

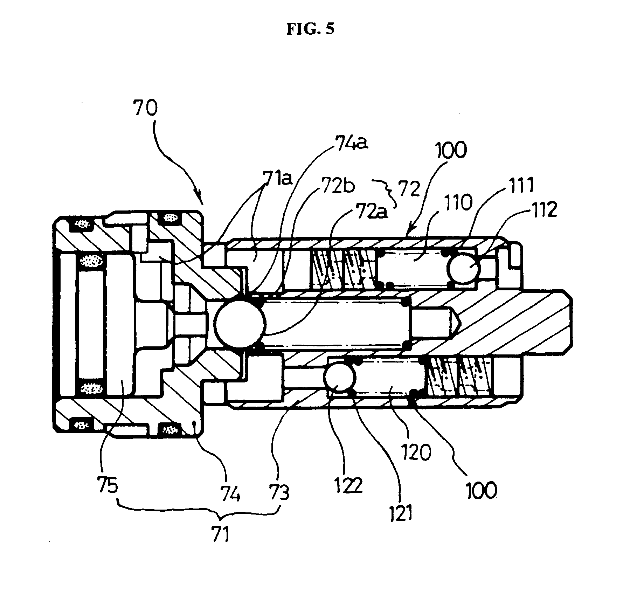

Then, as shown in Fig. 5, the second pilot spool (75) pushes a second ball member (72a) to open a second fluid passage (71a), so that the fluid filled in the rear cylinder chamber (33b) is discharged through the sixth fluid path (35).

In addition, the check valve for the rear cylinder chamber (70) is provided on the sixth fluid path (35) in the rotational valve member (30) and is provided with a second cutoff means (72) to open the second fluid passage (71a) only when fluid is supplied at a predetermined pressure or higher into the second valve housing (71), which includes the second fluid passage (71a) formed in communication with the sixth fluid path (35).

Referring to Figs. 3 and 5, the second valve housing (71) is provided on the sixth fluid path (35) of the rotational valve member (30), and comprises:
a second base body part (74) provided with the second fluid passage (71a) formed in communication with the sixth fluid path (35) and having a second ball-seating groove (74a) in its front surface;
a second guide protrusion (73) connected to the second base body part (74), with an end of the second guide protrusion (73) coupled with an inner side surface of the body member (50) through the piston plate (42), and having the second fluid passage (71a) therein to communicate the sixth fluid path (35) to the rear cylinder chamber (33b); and
the second pilot spool (75) provided in a rear part of the second base body part (74) to move by the pressure of fluid supply.

Further, the second cutoff means (72) to isolate the second fluid passage (71a) comprises a second ball member (72a) secured on the second ball-seating groove (74a) of the second base body part (74); and a second coil spring (72b) to elastically support the second ball member (72a) in the second fluid passage (71a).

Therefore, the second ball member (72a) is elastically supported by the second coil spring (72b) to block the second fluid passage (71 a), with securing on the second ball-seating groove (74a).

At this state, only when fluid is supplied to the second fluid passage (71 a) through the sixth fluid path (35) with a pressure high enough to push the second ball member (72a), the second fluid passage (71a) is opened to provide the fluid to the rear cylinder chamber (33b).

If the fluid is supplied to the rear cylinder chamber (33b), since fluid is simultaneously supplied through the second fluid compression passage (35a), the fluid pressure pushes the first pilot spool (65) to move.

Then, the first pilot spool (65) pushes the first ball member (62a) to open the first fluid passage (61 a), so that the fluid filled in the front cylinder chamber (33a) is discharged through the fifth fluid path (34).

Meanwhile, the second guide protrusion (73) of the second valve housing (71) is provided with the decompression means (100) to reduce pressure at the cylinder chamber (33) by communicating the front and the rear cylinder chambers (33a and 33b) when overpressure is generated in the front and the rear cylinder chambers (33a and 33b).

Referring to Fig. 5, the decompression means (100) comprises:
first and second cylinder connection routes (110 and 120) formed through the second guide protrusion (73) to communicate the front and the rear cylinder chambers (33a and 33b);
a third ball member (112) provided in the first cylinder connection route (110) and elastically supported by a third coil spring (111) to open the first cylinder connection route (110) only when fluid is compressed at a predetermined pressure or higher from the front cylinder chamber (33a) to the rear cylinder chamber (33b); and
a fourth ball member (122) provided in the second cylinder connection route (120) and elastically supported by a fourth coil spring (121) to open the second cylinder connection route (120) only when fluid is compressed at a predetermined pressure or higher from the rear cylinder chamber (33b) to the front cylinder chamber (33a).

Therefore, when the fluid is supplied to the rear cylinder chamber (33b) and it compresses the piston plate (42) to move the piston member (40) forward, if an excessive fluid pressure is applied on the rear cylinder chamber (33b), the fourth ball member (122) is pushed by this excessive fluid pressure to open the second cylinder connection route (120).

If the second cylinder connection route (120) is opened, the fluid in the rear cylinder chamber (33b) is discharged through the second cylinder connection route (120) to the front cylinder chamber (33a), where the fluid is discharged with the fluid in the front cylinder chamber (33a), thus decompressing the rear cylinder chamber (33b).

If the rear cylinder chamber (33b) is decompressed, the fourth ball member (122) returns to its original position by the elastic restoring force of the fourth coil spring (121), blocking the second cylinder connection route (120).

When the fluid is supplied to the front cylinder chamber (33a) and it compresses the piston plate (42) to move the piston member (40) backward, if an excessive fluid pressure is applied on the front cylinder chamber (33a), the third ball member (112) is pushed by this excessive fluid pressure to open the first cylinder connection route (110).

If the first cylinder connection route (110) is opened, the fluid in the front cylinder chamber (33a) is discharged through the first cylinder connection route (110) to the rear cylinder chamber (33b), where the fluid is discharged with fluid in the rear cylinder chamber (33b), thus decompressing the front cylinder chamber (33a).

If the front cylinder chamber (33a) is decompressed, the third ball member (112) returns to its original position by the elastic restoring force of the third coil spring (111), so that the first cylinder connection route (110) is blocked.

The operation of the hydraulic cylinder of the present invention will be explained in more detail hereinafter.

The first hydraulic port (10a) of the cylinder housing (10) is sequentially connected to the first fluid path (12), the third fluid path (23) of the sleeve member (20), the fifth fluid path (34) of the rotational valve member (30), the first fluid passage (61a) of the check valve (60), and the front cylinder chamber (33a), and it is also connected to the check valve for the rear cylinder chamber (70) through the first fluid compression passage (34a) in communication with the third fluid path (23).

The second hydraulic port (10b) of the cylinder housing (10) is sequentially connected to the second fluid path (13), the fourth fluid path (24) of the sleeve member (20), the sixth fluid path (35) of the rotational valve member (30), the second fluid passage (71 a) of the check valve for the rear cylinder chamber (70), and to the rear cylinder chamber (33b), and it is also connected to the check valve for the front cylinder chamber (60) through the second fluid compression passage (35a) in communication with the fourth fluid path (24).

The front cylinder chamber (33a) is charged with fluid, with the piston member (40) being withdrawn.

Specifically, if the fluid is supplied to the second hydraulic port (10b) at a predetermined pressure or higher, the fluid comes into the second fluid passage (71 a) of the check valve for the rear cylinder chamber (70) through the second, fourth and sixth fluid paths (13, 24 and 35), so that the second ball member (72a) is pushed to open the second fluid passage (71a).

Then, the fluid is supplied to the rear cylinder chamber (33b) through the opened second fluid passage (71a), so that the piston plate (42) is compressed and the piston member (40) advances forward.

If the piston member (40) moves forward, the piston member (40) makes the jaw of the chuck, which has been connected to the piston member (40), gripped and keeps firm the gripping of the jaw by the hydraulic pressure.

Further, the fluid which has been supplied to the fourth fluid path (24) is supplied to the check valve for the rear cylinder chamber (70) through the sixth fluid path (35), and at the same time it is supplied to the second fluid compression passage (35a), pushing to move the first pilot spool (65) of the check valve for the front cylinder chamber (60).

While being pushed and moved, the first pilot spool (65) pushes the first ball member (62a) to open the first fluid passage (61a).

Therefore, the fluid which has been charged in the front cylinder chamber (33a) passes through the opened first fluid passage (61a) and the fifth fluid path (34), and the fluid is induced to the first hydraulic port (10a) of the cylinder housing (10) to be discharged.

On the contrary, if the fluid is supplied to the first hydraulic port (10a) at a predetermined pressure or higher, the fluid comes into the first fluid passage (61a) through the first, third and fifth fluid paths (12, 23 and 34), so that the first ball member (62a) is pushed and the first fluid passage (61a) is opened.

Then, the fluid is supplied to the front cylinder chamber (33a) through the opened first fluid passage (61a) to compress the piston plate (42), so that the piston member (40) withdraws backward.

If the piston member (40) moves backward, the piston member (40) makes the jaw of the chuck, which has been connected to the piston member (40), released.

Further, the fluid which has been supplied to the third fluid path (23) is supplied to the check valve for the front cylinder chamber (60) through the fifth fluid path (34), and at the same time it is supplied to the first fluid compression passage (34a), pushing to move the second pilot spool (75) of the check valve for the rear cylinder chamber (70).

While being pushed and moved, the second pilot spool (75) pushes the second ball member (72a) to open the second fluid passage (71 a).

Therefore, the fluid which has been charged in the rear cylinder chamber (33b) passes through the opened second fluid passage (71a) and the sixth fluid path (35), and the fluid is induced to the second hydraulic port (10b) of the cylinder housing (10) to be discharged.

As mentioned above, when the piston member (40) moves back and forth by the supply of fluid to the front and the rear cylinder chambers (33a and 33b), the piston member (40) moves along the first and the second guide protrusions (63 and 73) of the first and the second valve housings (61 and 71), which have been connected to the piston plate (42) by passing through it.

Further, even if overpressure is generated while the fluid is supplied to the front and the rear cylinder chambers (33a and 33b), the decompression means (100) provided in the check valve for the rear cylinder chamber (70) reduces pressure, so that the malfunction of the machine tool and the reduction of durability of the cylinder body, which might have been caused by the overpressure, can be prevented.

An O-ring may be provided to seal between the cylinder housing (10) and the sleeve member (20), between the rotational valve member (30) and the piston member (40), between rotational valve member (30) and the body member (50), or between the periphery of the piston plate (42) and the inner side surface of the body member (50) in a conventional manner.

According to the present invention as described above, a hydraulic cylinder with a compact and simple structure is provided and it contributes to the economy of manufacturing process and cost.

Further, according to the present invention, a new hydraulic cylinder is provided having check valves to control the flow of fluid supplied to front and rear cylinder chambers of the hydraulic cylinder and having guide protrusions in valve housings of the check valves to guide a reciprocating motion of a piston member, and thus the hydraulic cylinder is not necessary to include a separate guide pin.

Furthermore, according to the present invention, a hydraulic cylinder is provided including a decompressing means integrally provided in the valve housings of the check valves to reduce overpressure generated in the front and the rear cylinder chambers during the operation of the hydraulic cylinder, thus not including a separate decompressing valve, i.e., a relief valve.

The present invention covers the modifications and variations thereof provided they come within the scope of the appended claims and their equivalents.

## Claims

1. A hydraulic device comprising:
a cylinder housing (10) having a through path (11) formed from one end to the other end and including first and second fluid paths (12 and 13) communicating from outside the housing (10) to the through path (11);
a sleeve member (20) arranged in the through path (11) of the cylinder housing (10), having a connection part (21) formed from one end to the other end, and including bearings (22) in the connection part (21) and third and fourth fluid paths (23 and 24) each in communication with the first and second fluid paths (12 and 13) respectively;
a rotational valve member (30) having a valve rod (31) coupled with the connection part (21) at one end and a valve plate (32) provided in front of the cylinder housing (10), one side of the valve plate (32), and including fifth and sixth fluid paths (34 and 35) arranged to connect the third and fourth fluid paths (23 and 24) to the cylinder chamber (33);
a body member (50) provided in front of the valve plate (32), together defining a cylinder chamber (33);
a piston member (40) including a piston head (42) connected to the valve rod (31) to slidably move back and forth, the piston head (42) dividing the cylinder chamber (33) into front and rear cylinder chambers (33a and 33b) and sealing the front and the rear cylinder chambers (33a and 33b) to the piston member (40);
a check valve (60) for the front cylinder chamber (33a) provided in the fifth fluid path (34) in the rotational valve member (30) and including a first cutoff means (62) to open a first fluid passage (61a) when fluid at a predetermined pressure or higher is supplied into a first valve housing (61), which includes the first fluid passage (61a) formed in communication with the fifth fluid path (34); and
a check valve (70) for the rear cylinder chamber (33b) provided in the sixth fluid path (35) in the rotational valve member (30) and including a second cutoff means (72) to open a second fluid passage (71a) only when fluid at a predetermined pressure or higher is supplied into a second valve housing (71), which includes the second fluid passage (71a) formed in communication with the sixth fluid path (35), **characterised in that**:
the first valve housing (61) is provided with the first fluid passage (61a) to connect the fifth fluid path (34) to the front cylinder chamber (33a), and includes a first guide protrusion (63) at one end thereof formed to be coupled with an inner side surface of the body member (50) through the piston head (42), and **in that**
the second valve housing (71) is provided with the second fluid passage (71a) to connect the sixth fluid path (35) to the rear cylinder chamber (33b), and includes a second guide protrusion (73) at one end thereof formed to be coupled with the inner side surface of the body member (50) through the piston head (42), and **in that**
the second guide protrusion (73) is provided with a decompression means (100) to reduce pressure in the cylinder chamber (33) by communicating the front and the rear cylinder chambers (33a and 33b) when overpressure is generated in the front or the rear cylinder chamber (33a and 33b).

2. The hydraulic cylinder device as claimed in claim 1, wherein the decompression means (100) comprises:
first and second cylinder connection routes (110 and 120) formed through the second guide protrusion (73) to communicate the front and the rear cylinder chambers (33a and 33b);
a third ball member (112) provided in the first cylinder connection route (110) and elastically supported by a third coil spring (111) to open the first cylinder connection route (110) only when fluid is compressed at a predetermined pressure or higher from the front cylinder chamber (33a) to the rear cylinder chamber (33b); and
a fourth ball member (122) provided in the second cylinder connection route (120) and elastically supported by a fourth coil spring (121) to open the second cylinder connection route (120) only when fluid is compressed at a predetermined pressure or higher from the rear cylinder chamber (33b) to the front cylinder chamber (33a).

## Patentansprüche

1. Hydraulische Vorrichtung enthaltend:
ein Zylindergehäuse (10), das eine Durchgangsbahn (11) hat, die von einem Ende zu dem anderen Ende ausgebildet ist und erste und zweite Fluidbahnen (12 und 13) enthält, die von der Außenseite des Gehäuses (10) zu der Durchgangsbahn (11) führen;
ein Hülsenelement (20) das in der Durchgangsbahn (11) des Zylindergehäuses (10) angeordnet ist und einen Verbindungsteil (21) hat, der von einem Ende zu dem anderen Ende geformt ist, und Lager (22) in dem Verbindungsteil (21) und dritte und vierte Fluidbahnen (23 und 24) enthält, die jeweils in Verbindung mit der ersten und der zweiten Fluidbahn (12 und 13) stehen;
ein Drehventilelement (30), das eine Ventilstange (31) hat, die mit dem Verbindungsteil (21) an einem Ende gekoppelt ist, und eine Ventilklappe (32), die vor dem Zylindergehäuse (10) vorgesehen ist, eine Seite der Ventilplatte (32), und fünfte und sechste Fluidbahnen (34 und 35) enthält, die angeordnet sind, um die dritte und die vierte Fluidbahn (23 und 24) mit der Zylinderkammer (33) zu verbinden;
ein Element (50), das vor der Ventilplatte (32) vorgesehen ist, die zusammen eine Zylinderkammer (33) begrenzen;
ein Kolbenelement (40) mit einem Kolbenkopf (42), der mit der Ventilstange (31) zur verschieblichen Vorwärts- und Rückwärtsbewegung verbunden ist, wobei der Kolbenkopf (42) die Zylinderkammer (33) in eine vordere und eine hintere Zylinderkammer (33a und 33b) unterteilt und die vordere und die hintere Zylinderkammer (33a und 33b) gegenüber dem Kolbenelement (40) abdichtet;
ein Rückschlagventil (60) für die vordere Zylinderkammer (33a) in der fünften Fluidbahn (34) in dem Drehventilelement (30), das ein erstes Absperrmittel (62) enthält, um einen ersten Fluiddurchlass (61 a) zu öffnen, wenn Fluid mit einem vorbestimmten Druck oder höherem Druck in ein erstes Ventilgehäuse (61) zugeführt wird, das den ersten Fluiddurchlass (61a) enthält, der in Verbindung mit der fünften Fluidbahn (34) steht; und
ein Rückschlagventil (70) für die hintere Zylinderkammer (33b) in der sechsten Fluidbahn (35) in dem Drehventilelement (30), das ein zweites Absperrmittel (72) enthält, um einen zweiten Fluiddurchlass (71a) nur dann zu öffnen, wenn Fluid mit einem vorbestimmten Druck oder höherem Druck in ein zweiten Ventilgehäuse (71) zugeführt wird, das den zweiten Fluiddurchlass (71 a) enthält, der in Verbindung mit der sechsten Fluidbahn (35) steht.
**dadurch gekennzeichnet,**
**dass** das erste Ventilgehäuse (61) mit dem ersten Fluiddurchlass (61a) versehen ist, um die fünfte Fluidbahn (34) mit der vorderen Zylinderkammer (33a) zu verbinden, und einen ersten Führungsvorsprung (63) an einem Ende enthält, der geformt ist, um mit einer Innenseitenfläche des Elementes (50) durch den Kolbenkopf (42) gekoppelt zu sein, und
**dass** das zweite Ventilgehäuse (71) mit dem zweiten Fluiddurchlass (71 a) versehen ist, um die sechste Fluidbahn (35) mit der hinteren Zylinderkammer (33b) zu verbinden, und einen zweiten Führungsvorsprung (73) an einem Ende aufweist, der geformt ist, um mit der Innenseitenfläche des Elementes (50) durch den Kolbenkopf (42) gekoppelt zu sein, und
**dass** der zweite Führungsvorsprung (73) mit einer Dekompressionseinrichtung(100) versehen ist, um den Druck in der Zylinderkammer (33) zu verringern, durch Verbinden der vorderen und der hinteren Zylinderkammer (33a und 33b), wenn Überdruck in der vorderen oder der hinteren Zylinderkammer (33a und 33b) erzeugt wird.

2. Hydraulische Zylindervorrichtung nach Anspruch 1, wobei die Dekompressionseinrichtung (100) enthält:
erste und zweite Zylinderverbindungswege (110 und 120), die durch den zweiten Führungsvorsprung (73) geformt sind, um die vordere und die hintere Zylinderkammer (33a und 33b) zu verbinden;
ein drittes Kugelelement (112), das in dem ersten Zylinderverbindungsweg (110) vorgesehen und elastisch von einer dritten Schraubenfeder (111) gehalten ist, um den ersten Zylinderverbindungsweg (110) nur dann, wenn Fluid mit einem vorbestimmten Druck oder größerem Druck komprimiert wird, von der vorderen Zylinderkammer (33a) zu der hinteren Zylinderkammer (33b) zu öffnen; und
ein viertes Kugelelement (122) in dem zweiten Zylinderverbindungsweg (120), das elastisch von einer vierten Schraubenfeder (121) gehalten ist, um den zweiten Zylinderverbindungsweg 120) nur dann, wenn das Fluid mit einem vorbestimmten Druck oder höheren Druck komprimiert wird, von der hinteren Zylinderkammer (33) zu der vorderen Zylinderkammer (33a) zu öffnen.

## Revendications

1. Dispositif hydraulique comprenant :
un corps de cylindre (10) qui a un chemin traversant (11) formé d'une extrémité à l'autre extrémité, et qui comprend des premier et deuxième chemins de fluide (12 et 13) communiquant de l'extérieur du corps (10) jusqu'au chemin traversant (11) ;
un élément formant manchon (20) disposé dans le chemin traversant (11) du corps de cylindre (10), qui a un élément de raccordement (21) formé d'une extrémité à l'autre extrémité, qui comprend des portées (22) dans l'élément de raccordement (21) et des troisième et quatrième chemins de fluide (23 et 24), chacun en communication respectivement avec les premier et deuxième chemins de fluide (12 et 13);
un élément formant soupape pouvant tourner (30), ayant une tige de soupape (31) raccordée à l'élément de raccordement (21) à une extrémité et à une plaque de soupape (32) disposée devant le corps de cylindre (10), d'un côté de la plaque de soupape (32), et comprenant des cinquième et sixième chemins de fluide (34 et 35) disposés pour raccorder les troisième et quatrième chemins de fluide (23 et 24) à la chambre de cylindre (33);
un élément formant corps (50) disposé en avant de la plaque de soupape (32), définissant avec celle-ci une chambre de cylindre (33);
un élément formant piston (40), comprenant une tête de piston (42) raccordée à la tige de soupape (31) pour se déplacer en avant et en arrière en glissant, la tête de piston (42) séparant la chambre de cylindre (33) en chambres de cylindre avant et arrière (33a et 33b) et assemblant de façon étanche les chambres de cylindre avant et arrière (33a et 33b) à l'élément formant piston (40);
un clapet de retenue (60) pour la chambre de cylindre avant (33a), disposé dans le cinquième chemin de fluide (34) dans l'élément formant soupape pouvant tourner (30), et comprenant un premier moyen de fermeture (62) pour ouvrir un premier passage de fluide (61a) quand un fluide à une pression prédéterminée ou plus élevée est fourni dans un premier logement de soupape (61) qui comprend le premier passage de fluide (61a) formé en communication avec le cinquième chemin de fluide (34); et
un clapet de retenue (70) pour la chambre de cylindre arrière (33b) disposé dans le sixième chemin de fluide (35) dans l'élément formant soupape pouvant tourner (30), et comprenant un deuxième moyen de fermeture (72) pour ouvrir un deuxième passage de fluide (71a) seulement quand un fluide à une pression prédéterminée ou plus élevée est fourni dans un deuxième logement de soupape (71) qui comprend le deuxième passage de fluide (71a) formé en communication avec le sixième chemin de fluide (35); **caractérisé en ce que** :
le premier logement de soupape (61) est pourvu du premier passage de fluide (61a) pour raccorder le cinquième chemin de fluide (34) à la chambre de cylindre avant (33a), et comprend une première saillie formant guide (63) à une extrémité de celle-ci, formée pour être raccordée à une surface latérale intérieure de l'élément formant corps (50) au travers de la tête de piston (42), et **en ce que**
le deuxième logement de soupape (71) est pourvu du deuxième passage de fluide (71a) pour raccorder le sixième chemin de fluide (35) à la chambre de cylindre arrière (33b), et comprend une deuxième saillie formant guide (73) à une extrémité de celle-ci, formée pour être raccordée à la surface latérale intérieure de l'élément formant corps (50) au travers de la tête de piston (42), et **en ce que**
la deuxième saillie formant guide (73) est pourvue d'un moyen de décompression (100) pour réduire une pression dans la chambre de cylindre (33), en mettant en communication les chambres de cylindre avant et arrière (33a et 33b) quand une surpression est générée dans la chambre de cylindre avant ou arrière (33a et 33b) .

2. Dispositif formant cylindre hydraulique selon la revendication 1, dans lequel le moyen de décompression (100) comprend :
des premier et deuxième chemins de raccordement de cylindre (110 et 120) formés au travers de la deuxième saillie formant guide (73), pour mettre en communication les chambres de cylindre avant et arrière (33a et 33b) ;
un troisième élément formant bille (112), disposé dans le premier chemin de raccordement de cylindre (110) et supporté de façon élastique par un troisième ressort à boudin (111), pour ouvrir le premier chemin de raccordement de cylindre (110) de la chambre de cylindre avant (33a) à la chambre de cylindre arrière (33b) seulement quand un fluide est comprimé à une pression prédéterminée ou plus élevée; et
un quatrième élément formant bille (122), disposé dans le deuxième chemin de raccordement de cylindre (120) et supporté de façon élastique par un quatrième ressort à boudin (121), pour ouvrir le deuxième chemin de raccordement de cylindre (120) de la chambre de cylindre arrière (33b) à la chambre de cylindre avant (33a) seulement quand un fluide est comprimé à une pression prédéterminée ou plus élevée.
